(19)

Europäisches Patentamt
European Patent Office
Office européen des brevets

(11) **EP 4 554 210 A1**

(12) **EUROPEAN PATENT APPLICATION**
published in accordance with Art. 153(4) EPC

(43) Date of publication:
**14.05.2025 Bulletin 2025/20**

(21) Application number: **23835838.6**

(22) Date of filing: **05.07.2023**

(51) International Patent Classification (IPC):
**H04N 19/109** *(2014.01)*    **H04N 19/105** *(2014.01)*
**H04N 19/176** *(2014.01)*    **H04N 19/132** *(2014.01)*

(52) Cooperative Patent Classification (CPC):
**H04N 19/105; H04N 19/109; H04N 19/132;
H04N 19/176**

(86) International application number:
**PCT/KR2023/009522**

(87) International publication number:
**WO 2024/010372 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 US 202263358519 P
11.07.2022 US 202263388236 P**

(71) Applicant: **LG Electronics Inc.
Yeongdeungpo-gu
Seoul 07336 (KR)**

(72) Inventors:
• **JANG, Hyeong Moon
Seoul 06772 (KR)**
• **NAM, Jung Hak
Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD BASED ON AMVP-MERGE MODE, DEVICE, AND RECORDING MEDIUM FOR STORING BITSTREAM**

(57)    An image encoding/decoding method and apparatus are provided. An image decoding method may comprise determining prediction modes respectively applied to prediction directions of a current block, the prediction mode comprising an AMVP mode and a merge mode, constructing an AMVP candidate list and a merge candidate list based on the prediction modes, and generating a prediction block of the current block based on the AMVP candidate list and the merge candidate list. The merge candidate list includes a fallback candidate.

FIG. 13

EP 4 554 210 A1

## Description

### Technical Field

The present disclosure relates to an image encoding/decoding method and apparatus and a recording medium for storing a bitstream and, more particularly, to an image encoding and decoding method and apparatus based on an amvpMerge mode, and a recording medium for storing bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide an image encoding/decoding method and apparatus that performs amvpMerge mode..

In addition, an object of the present disclosure is to provide an image encoding/decoding method and apparatus that constructs a fall back merge candidate in amvpMerge mode.

In addition, an object of the present disclosure is to provide a non-transitory computer-readable recording medium for storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus may comprise determining prediction modes respectively applied to prediction directions of a current block, the prediction mode comprising an AMVP mode and a merge mode, constructing an AMVP candidate list and a merge candidate list based on the prediction modes, and generating a prediction block of the current block based on the AMVP candidate list and the merge candidate list. The merge candidate list includes a fallback candidate.

According to an embodiment of the present disclosure, the fallback candidate may be included in the merge candidate list based on the number of merge candidates included in the merge candidate list being less than a maximum number of merge candidates.

According to an embodiment of the present disclosure, the fallback candidate may be included in the merge candidate list based on the number of reference pictures included in a merge reference picture list being less than a predetermined value.

According to an embodiment of the present disclosure, the predetermined value may be the smaller value among the number of reference pictures included in the merge reference picture list and the number of reference pictures included in the AMVP reference picture list.

According to an embodiment of the present disclosure, the predetermined value may be the number of reference pictures included in the merge reference picture list.

According to an embodiment of the present disclosure, the fallback candidate may be included in the merge candidate list based on a reference picture of the fallback candidate being available.

According to an embodiment of the present disclosure, the fallback candidate may be included in the merge candidate list based on the number of merge candidates included in the merge candidate list being less than or equal to a predefined value.

According to an embodiment of the present disclosure, an image encoding method performed by an image encoding apparatus may comprise determining prediction modes respectively applied to prediction directions of a current block, the prediction mode comprising an AMVP mode and a merge mode, constructing an AMVP candidate list and a merge candidate list based on the prediction modes, and generating a prediction block of the current block based on the AMVP candidate list and the merge candidate list. The merge candidate list may include a fallback candidate.

According to an embodiment of the present disclosure, in a method of transmitting a bitstream generated by an image encoding method, the image encoding method may comprise determining prediction modes respectively applied to prediction directions of a current block, the prediction mode comprising an AMVP mode and a merge mode, constructing an AMVP candidate list and a merge candidate list based on the prediction modes, and generating a prediction block of the current block based on the AMVP candidate list and the merge candidate list. The merge candidate list may include a fallback candidate.

## Advantageous Effects

According to the present disclosure, it is possible to provide an image encoding/decoding method and apparatus with improved encoding/decoding efficiency.

In addition, according to the present disclosure, it is possible to provide an image encoding/decoding method and apparatus that performs amvpMerge mode..

In addition, according to the present disclosure, it is possible to provide an image encoding/decoding method and apparatus that constructs a fall back merge candidate in amvpMerge mode.

Also, according to the present disclosure, it is possible to provide a non-transitory computer-readable recording medium for storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

## Description of Drawings

FIG. 1 is a view schematically illustrating a video coding system, to which an embodiment of the present disclosure is applicable.

FIG. 2 is a view schematically illustrating an image encoding apparatus, to which an embodiment of the present disclosure is applicable.

FIG. 3 is a view schematically illustrating an image decoding apparatus, to which an embodiment of the present disclosure is applicable.

FIG. 4 is a diagram schematically showing an inter prediction unit of an image encoding apparatus.

FIG. 5 is a flowchart illustrating a method of encoding an image based on inter prediction.

FIG. 6 is a diagram schematically showing an inter prediction unit of an image decoding apparatus.

FIG. 7 is a flowchart illustrating a method of decoding an image based on inter prediction.

FIG. 8 is a flowchart illustrating an inter prediction method.

FIG. 9 is a flowchart illustrating an image encoding method according to an embodiment of the present disclosure.

FIGS. 10A to 10C are flowcharts illustrating a method of constructing a merge candidate list according to an embodiment of the present disclosure.

FIGS. 11A to 11C are flowcharts illustrating a method of constructing a merge candidate list according to an embodiment of the present disclosure.

FIGS. 12A to 12C are flowcharts illustrating a method of constructing a merge candidate list according to one embodiment of the present disclosure.

FIG. 13 is a flowchart of a method of constructing a fall back merge candidate according to one embodiment of the present disclosure.

FIG. 14 is a view illustrating a content streaming system, to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

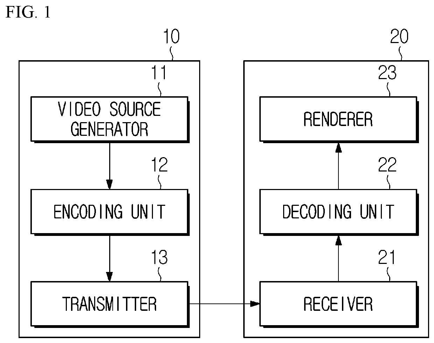

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 120, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

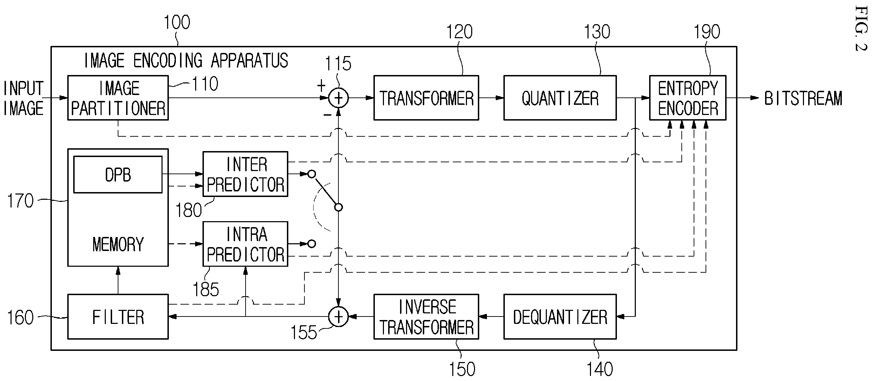

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, luma mapping with chroma scaling (LMCS) is applicable in a picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

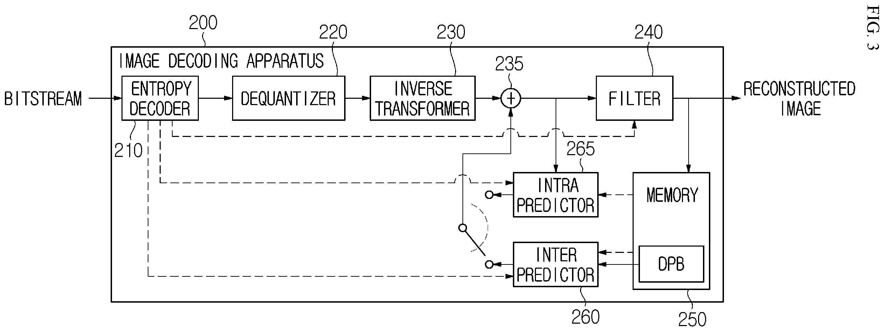

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

**Inter prediction**

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

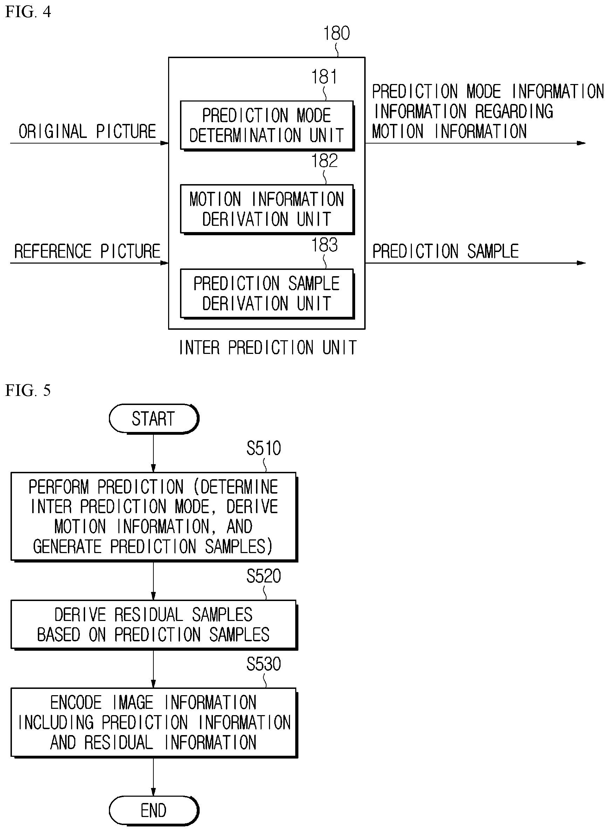

FIG. 4 is a diagram schematically showing the inter prediction unit 180 of the image encoding apparatus 100, and FIG. 5 is a flowchart illustrating a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

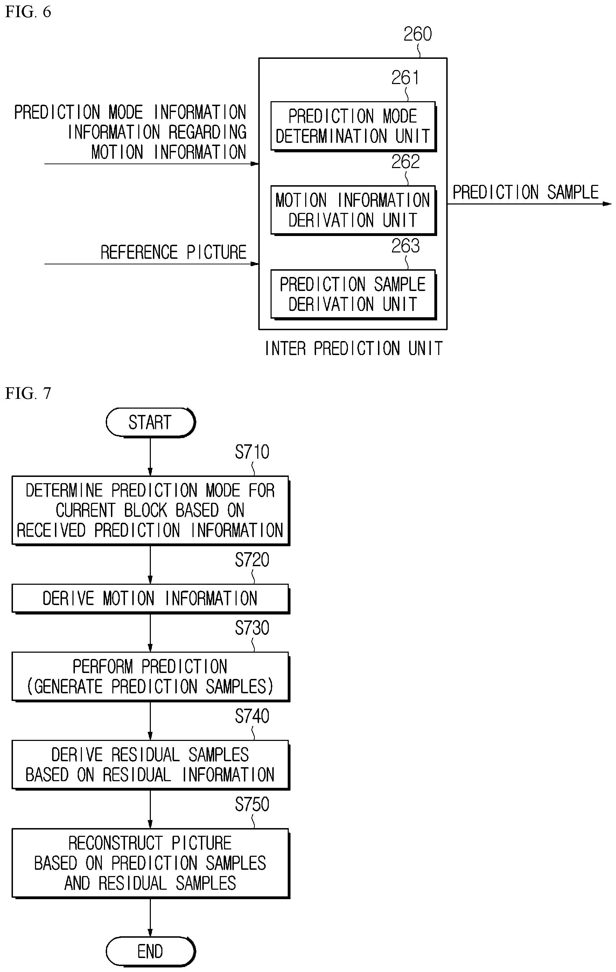

FIG. 6 is a diagram schematically showing the inter prediction unit 260 of the image decoding apparatus 200, and FIG. 7 is a flowchart illustrating a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter prediction unit 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

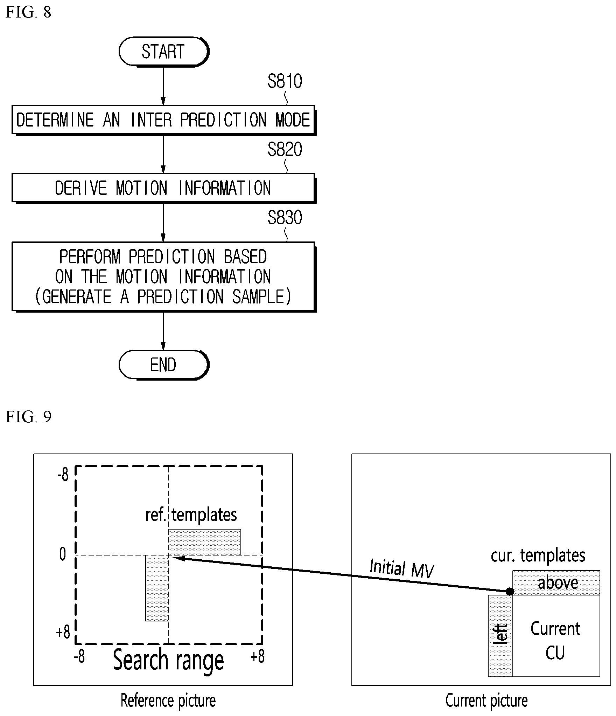

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

### Inter prediction mode determination

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

### Derivation of motion information

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

**Generation of prediction sample**

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

**Template matching (TM)**

FIG. 9 is a diagram for explaining a template matching-based encoding/decoding method according to the present disclosure.

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to the current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 9, when an initial motion vector of the current block is derived, a search for a better motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor candidate (MVP candidate) may be determined based on a template matching error. For example, a motion vector predictor candidate (MVP candidate) that minimizes an error between the current template and the reference template may be selected. After that, template matching for refining a motion vector may be performed on the selected motion vector predictor candidate. At this time, template matching for refining a motion vector may not be performed on motion vector predictor candidates that are not selected.

More specifically, the refinement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, a search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, i.e., the number of samples in the block. Table 1 shows examples of search patterns according to the AMVR mode and the merge mode accompanied with AMVR.

[Table 1]

| Search pattern | AMVR mode | | | | Merge mode | |
|---|---|---|---|---|---|---|
| | 4-pel | Full-pel | Half-pel | Quarter-pel | AltTF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or half-pel accuracy or lower may be skipped, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector refinement process between block-based bilateral matching and subblock-based bilateral matching. Whether the template matching is available and/or whether the bilateral matching is available may be determined according to an availability condition check. In the above, the accuracy of the motion vector may mean the accuracy of a motion vector difference (MVD).

Hereinafter, an image encoding/decoding method according to various embodiments of the present disclosure will be described in detail.

The present disclosure relates to amvpMerge, and more specifically, to a method of constructing a fall back candidate in a merge candidate list in amvpMerge mode. Here, the amvpMerge mode may be a mode in which AMVP (Advanced Motion Vector Prediction) is performed on a current block for an arbitrary prediction direction, and prediction is performed in merge mode for an arbitrary opposite prediction direction to generate a prediction block.

According to one embodiment of the present disclosure, when performing prediction in amvpMerge mode, the image encoding apparatus 100 and/or the image decoding apparatus 200 may construct fallback candidates. The image encoding apparatus 100 and/or the image decoding apparatus 200 may construct a merge candidate list for an arbitrary direction in which prediction is performed in the merge mode. In this case, the present disclosure may be a method of constructing one or more fallback candidates by traversing all reference pictures of a merge reference picture list in a process of constructing a merge candidate list. By necessarily constructing one or more fallback candidates, the present disclosure can prevent a case in which motion information is not derived in the amvpMerge mode. Therefore, the present disclosure can prevent a case in which decoding is not performed in the image decoding apparatus 200.

**Embodiment 1**

According to one embodiment of the present disclosure, in a process of generating a prediction block using two or more reference pictures, for an arbitrary prediction direction, motion information may be derived by constructing an amvp prediction candidate. In addition, for an opposite prediction direction, motion information may be derived by constructing a merge prediction candidate. That is, amvp prediction may be performed for an arbitrary direction, and merge prediction may be performed for the opposite direction to generate a final prediction block for the current block.

In the case of an arbitrary prediction direction in which motion information is derived as an amvp prediction candidate, motion information may be derived without explicitly signaling an MVD if a specific condition is satisfied. On the other hand, if the specific condition is not satisfied, motion information may be derived by explicitly signaling an MVD (Motion Vector Difference) for refining motion information in an amvp prediction direction in a bitstream in the same way as deriving motion information by a conventional amvp prediction method.

According to one embodiment of the present disclosure, the amvpMerge mode may be applied even when the reference picture list consists of only POCs having a smaller value than the POC of the picture including the current slice or when it consists of a larger value.

In the present disclosure, it may be determined whether to perform amvpMerge prediction at a slice header level. In particular, when a reference picture of a reference picture list of a slice satisfies a specific condition, an amvpMerge prediction candidate may be constructed in a CU (coding unit) or PU (prediction unit) of the corresponding slice to derive motion information. Embodiments according to the present disclosure may be implemented on a slice-by-slice basis. That is, when one picture consists of multiple slices, whether to perform the amvpMerge prediction method may be determined on a slice-by-slice basis.

According to one embodiment of the present disclosure, when a slice type allows two or more pieces of motion information, the slice may determine availability of amvpMerge by considering the presence of a reference picture on which the amvpMerge mode may be performed. For example, when all of the reference pictures constructed in the reference picture list of the current slice precede or follow the current picture, the image decoding apparatus 200 may check whether or not they may be a reference picture set of amvpMerge. That is, when the POCs of the reference pictures constructed in the reference picture list of the current slice are all smaller than or all larger than the POC of the current picture, the image decoding apparatus 200 may check whether or not they may be a reference picture set of amvpMerge.

Additionally, if the reference picture satisfies a specific condition, amvpMerge mode may be performed for the corresponding slice. Here, the specific condition may be Condition 1 and/or Condition 2. Condition 1 may be specified as a case where all or one or more of the following conditions are satisfied.

If the reference picture corresponding to refIdxListX is not RPR
If the reference picture corresponding to refIdxListY is not RPR
If the reference picture corresponding to refIdxListX is not a long-term reference picture
If the reference picture corresponding to refIdxListY is not a long-term reference picture
If the weight of the weighted prediction for the reference picture corresponding to refIdxListX is not signaled
If the weight of the weighted prediction for the reference picture corresponding to refIdxListY is not signaled
Here, refIdxListX may mean the reference picture index in the X direction of the reference picture list. X may have a value of 0 or 1, and may mean the L0 reference picture list and the L1 reference picture list, respectively. refIdxListY means a list in the opposite direction of an arbitrary prediction direction X, and the Y value may be derived by calculating (1 - X). RPR means reference picture resampling, and may indicate a case where the resolution of the reference picture is different from the resolution of the current picture.

In addition, Condition 2 may specify a case where the POC of one reference picture is smaller than the POC of the current picture, and the POC of another reference picture is larger than the POC of the current picture. That is, Condition 2 may be Equation 1 below.

$$[\text{Equation 1}]$$
$$(\text{pocLX} - \text{curPOC}) \times (\text{pocLY} - \text{curPOC}) < 0$$

Here, the POC of the reference picture corresponding to refIdxLX may be defined as pocLX, the POC of the reference picture corresponding to refIdxLY may be defined as pocLY, and the POC of the current picture may be represented as curPOC.

Hereinafter, a method of constructing a merge prediction candidate list for amvpMerge mode will be described.

## Embodiment 2

According to one embodiment of the present disclosure, the image encoding apparatus 100 and/or the image decoding apparatus 200 may construct a merge candidate list in a process of deriving motion information using amvpMerge mode. In particular, the present disclosure may be a method of constructing a fallback candidate, for a case where the merge candidate list is not constructed as many as the required number of merge candidates. Specifically, the image encoding apparatus 100 and/or the image decoding apparatus 200 may check whether the amvpMerge mode is an available reference picture while traversing all reference pictures of the merge reference picture list in order to have a merge reference picture on which prediction may be performed in the amvpMerge mode. If the amvpMerge mode is an available reference picture, the image encoding apparatus 100 and/or the image decoding apparatus 200 may construct a fallback candidate by referring to the corresponding reference picture.

According to one embodiment of the present disclosure, when a current slice is a B slice, the number of L0 and L1 reference pictures is checked, and only the minimum reference picture index among the numbers of reference pictures in the L0 reference picture list and the L1 reference picture list is considered, thereby constructing a fallback candidate. For example, when the number of reference pictures included in the L0 reference picture list is 3 and the number of reference pictures included in the L1 reference picture list is 1, numRefIdx may be 1. If amvpMerge may be performed on the reference picture indicated by the reference index 0, the fallback candidate may be constructed in the list as a 0 vector by considering the corresponding reference picture. However, if the reference picture indicated by the reference index 0 is a reference picture on which amvpMerge is not performed, the corresponding candidate cannot be constructed as a fallback candidate. In this case, since numRefIdx is 1, no new fallback candidate can be constructed any more.

For example, it may be assumed that the POC of the current picture is 16, the reference pictures included in the L0 reference picture list are POC-32, POC-48, POC-0 in order, and the reference pictures included in the L1 reference picture list are POC-32 in order. If amvpMergeModeFlag[0] is true, a merge candidate list may be constructed for the L0 prediction direction. In addition, numRefIdx is 1, and POC-32 with the L0 reference picture index 0 may not have a reference picture on which amvpMerge may be performed because there is an identical reference picture in the L1 reference picture list. That is, since amvpMergeValidRefIdx[REF_PIC_LIST_0][0] is false, mergeRefIdx 0 is invalid and cannot be constructed as a candidate, and the process of constructing fallback candidates may be terminated. Here, amvpMergeValidRefIdx [REF_PIC_LIST_0][0] may indicate whether the reference picture corresponding to reference index 0 of the L0 reference picture list is a reference picture that may derive motion information of the amvpMerge mode.

According to another embodiment of the present disclosure, in order to prevent the fallback candidate construction process from being terminated without constructing the fallback candidate, the fallback candidate may be constructed by considering the number of reference pictures included in the merge reference picture list of amvpMerge. In this case, since only the number of reference pictures included in the merge reference picture list is considered, numRefIdx may be 3 in the above example. In addition, since mergeRefIdx 0, 1, and 2 are all traversed, the fallback candidate may be constructed while traversing POC-32, POC-48, and POC-0. Since the POC of the current picture is POC-16, the image encoding apparatus 100 or the image decoding apparatus 200 may construct the fallback candidate referring to a reference picture set including a POC-0 reference picture in the L0 direction and a POC-32 reference picture in the L1 direction.

According to another embodiment of the present disclosure, the number of fallback candidates may be predefined. That is, in the present disclosure, only a predefined number of fallback candidates may be generated. Specifically, instead of generating fallback candidates until MaxNumMergeCand candidates are constructed, a predefined number N of fallback candidates may be constructed. In this case, the number of merge candidates that have already been constructed may also be considered. Here, MaxNumMergeCand may mean the maximum number of merge candidates.

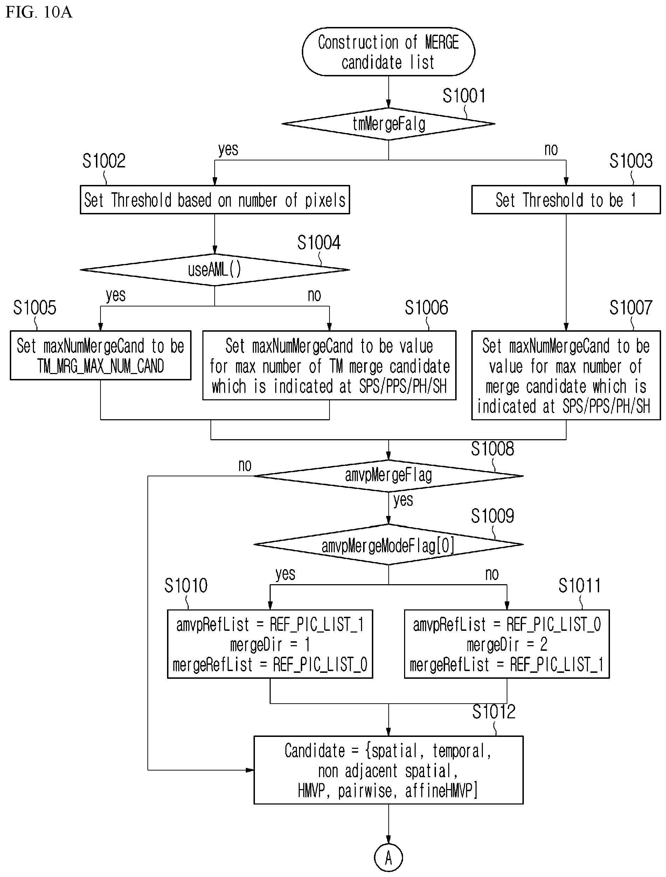

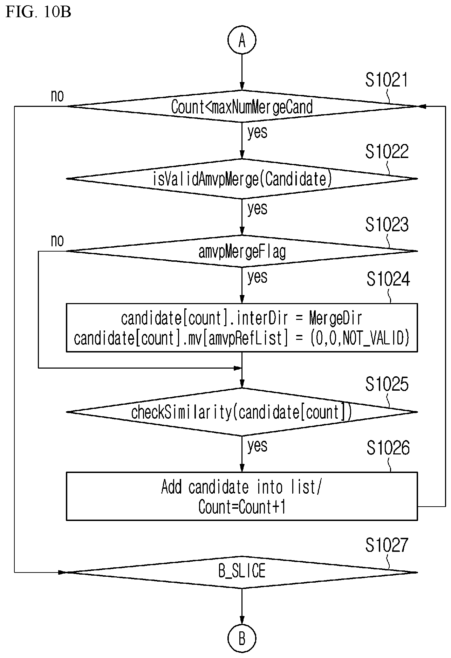

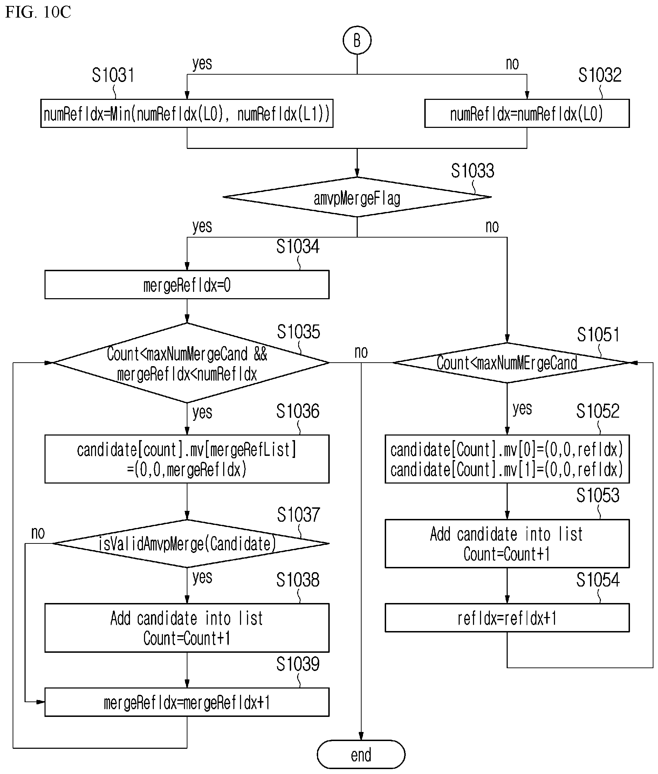

For example, if the value of N is defined as 0, if there is already one or more merge candidates constructed before the fallback candidate is constructed, the fallback candidate may not be constructed. On the other hand, if the number of pre-constructed merge candidates is 0, one fallback candidate may be added. Here, N may be an integer and may have a value less than or equal to maxNumMergCand. Hereinafter, embodiments according to the present disclosure will be described with reference to FIGS. 10, 11, and 12.

FIGS. 10A, 10B, and 10C are flowcharts illustrating a method of constructing a merge candidate list according to an embodiment of the present disclosure. According to one embodiment of the present disclosure, the image decoding apparatus 200 may check tmMergeFlag (S1001). Here, tmMergeFlag may be a flag indicating whether template matching-based merge prediction is performed.

When performing template matching-based merge prediction (YES in S1001), the image decoding apparatus 200 may set a threshold based on the number of pixels in the picture (S1002). In this case, the image decoding apparatus 200 may check useAML() (S1004). Here, useAML() may be a syntax indicating whether to use AML. When AML is used (YES in S1004), the value of maxNumMergeCand may be set to TM_MRG_MAX_NUM_CAND (S1005). On the other hand, when AML is not used (NO in S1004), the value of maxNumMergeCand may be set to the maximum number of TM merge candidates signaled at SPS/PPS/PH/SH (S1006). Here, AML means adaptive merge list, and maxNumMerge-Cand may mean the maximum number of merge candidates that may be included in the merge candidate list.

Meanwhile, when template matching-based merge prediction is not performed (NO in step S1001), the threshold may be set to 1 (S1003). In this case, the value of maxNumMergeCand may be set to the maximum number of TM merge candidates signaled at SPS/PPS/PH/SH (S1007).

Thereafter, the image decoding apparatus 200 may check amvpMergeFlag (S1008). Here, amvpMergeFlag may be a flag indicating whether amvpMerge mode is applied to the current block. If amvpMerge mode is applied to the current block (YES in step S1008), the image decoding apparatus 200 may check amvpMergeModeFlag[0] (S1009). Here, amvpMergeModeFlag[0] may be a flag indicating whether the prediction mode applied to the L0 prediction direction is the merge mode.

If the prediction mode applied to the L0 prediction direction is the merge mode (YES in step S1009), the image decoding apparatus 200 may generate an amvp reference picture list for the L1 direction (amvpRefList=REF_PIC_LIST_1) and a merge reference picture list for the L0 direction (mergeRefList=REF_PIC_LIST_0), and may assign 1 to an index (mergeDir) indicating the merge direction (S1010).

On the other hand, if the prediction mode applied to the L0 prediction direction is not the merge mode (NO in step S1009), the image decoding apparatus 200 may generate an amvp reference picture list for the L0 direction (amvpRefList=REF_PIC_LIST_0) and a merge reference picture list for the L1 direction (mergeRefList=REF_PIC_LIST_1), and may assign 2 to the index (mergeDir) indicating the merge direction (S1011).

The image decoding apparatus 200 may generate a merge candidate list (S1012). Even if the amvpMerge mode is not applied to the current block (NO in step S1008), the image decoding apparatus 200 may generate the merge candidate list (S1012). At this time, the merge candidates included in the merge candidate list may be motion information of spatially adjacent blocks (spatial), motion information of temporally adjacent blocks (temporal), motion information of spatially non-adjacent blocks (non-adjacent spatial), HMVP (History based Motion Vector Prediction), pairwise, and affineHMVP.

After generating merge candidates included in the merge candidate list, the image decoding apparatus 200 may check whether the maximum number of merge candidates (maxNumMergeCand) is greater than the index (count) indicating the merge candidates included in the current merge candidate list (S1021). If the maximum number of merge candidates is not greater than the index (count) indicating the merge candidates included in the current merge candidate list (NO in step S1021), that is, if the maximum number of merge candidates is less than or equal to the index (count) indicating the merge candidates included in the current merge candidate list, the image decoding apparatus 200 may check whether the slice including the current block is a B slice (S1027).

If the maximum number of merge candidates is greater than the index (count) indicating the merge candidates included in the current merge candidate list (YES in step S1021), the image decoding apparatus 200 may check the isValidAmvpMerge syntax (S1022). Here, isValidAmvpMerge may be a syntax indicating whether the reference picture indicated by the motion information of the corresponding merge candidate is available for amvpMerge. If the reference picture indicated by the motion information of the corresponding merge candidate is not available for the amvpMerge mode, the image decoding apparatus 200 may return to step S1012 without adding the corresponding merge candidate to the amvpMerge candidate list. In this case, the image decoding apparatus 200 may perform steps S1021 to S1026 again on another merge candidate.

On the other hand, if the reference picture indicated by the motion information of the corresponding merge candidate is available for the amvpMerge mode (YES in step S1022), the image decoding apparatus 200 may check amvpMergeFlag (S1023). Here, amvpMergeFlag may be a flag indicating whether the amvpMerge mode is applied to the current block. If amvpMergeFlag indicates that the amvpMerge mode is applied to the current block (YES in step S1023), the image decoding apparatus 200 may assign the value of mergeDir to candidate[count].interDir and may assign (0,0,NOT_VALID) to candidate[count].mv[amvpRefList] (S1024). That is, in order to perform the subsequent step S1025 using only the motion information of the merge candidate list, the image decoding apparatus 200 may reset the motion information of the interDir and amvp candidate lists.

Thereafter, the image decoding apparatus 200 may check checkSimilarity(candidate[count]) (S1025). Here, checkSimilarity(candidate[count]) may indicate whether the similarity between the corresponding merge candidate and the candidate previously added to the merge candidate list is similar to the threshold determined in step S1002 or step S1003. If the corresponding merge candidate and the candidate previously added to the merge candidate list are similar, the image decoding apparatus 200 may return to step S1012 without adding the corresponding merge candidate to the amvpMerge candidate list. In this case, the image decoding apparatus 200 may perform steps S1021 to S1026 on another merge candidate. On the other hand, if the merge candidate is not similar to a candidate previously added to the merge candidate list (YES in step S1025), the image decoding apparatus 200 may add the merge candidate to the merge candidate list of amvpMerge and add 1 to the Count value (S1026).

For the Count to which 1 is added, steps S1021 to S1027 may be performed again. If the index of the merge candidate included in the merge candidate list becomes equal to the maximum number of merge candidates (NO in step S1021), the image decoding apparatus 200 may check whether the slice including the current block is a B slice (S1027). That is, after performing steps S1021 to S1026 for all merge candidates included in the merge candidate list, the image decoding apparatus 200 may check whether the slice including the current block is a B slice.

If the slice including the current block is a B slice (YES in step S1027), the image decoding apparatus 200 may assign the minimum value among the number of reference pictures in the reference picture list in the L0 direction and the number of reference pictures in the reference picture list in the L1 direction to numRefIdx (S1031). If the slice including the current block is not a B slice (NO in step S1027), the image decoding apparatus may assign the number of reference pictures in the reference picture list in the L0 direction to numRefIdx (S1032).

The image decoding apparatus 200 may check amvpMergeFlag (S1033). Here, amvpMergeFlag may be a flag indicating whether amvpMerge mode prediction is applied to the current block. If amvpMerge mode prediction is applied to the current block (YES in step S1033), the image decoding apparatus 200 may assign 0 to mergeRefIdx (S1034). The image decoding apparatus 200 may check whether the maximum value of the number of merge candidates is greater than the number of merge candidates included in the merge candidate list and whether the value of numRefIdx is greater than the value of mergerdfIdx (S1035). If the maximum number of merge candidates is less than or equal to the number of merge candidates included in the merge candidate list, or if the value of numRefIdx is less than or equal to the value of mergeRefIdx (NO in step S1035), the image decoding apparatus 200 may terminate the procedure.

On the other hand, if the maximum value of the number of merge candidates is greater than the number of merge candidates included in the merge candidate list, or the value of numRefIdx is greater than the value of mergeRefIdx (YES in step S1035), the image decoding apparatus 200 may assign (0, 0, mergeRefIdx) to candidate[Count].mv[mergeRefList] (S1036). That is, the image decoding apparatus 200 may reset the motion information of the merge candidate. Specifically, the motion vector of the merge candidate indicated by Count may be set to (0, 0, mergeRefList). Here, mergeRefList may mean a reference picture list referenced by the corresponding candidate.

The image decoding apparatus 200 may check isValidAmvpMerge(candidate) (S1037). Here, isValidAmvp-Merge(candidate) may be a syntax indicating whether the reference picture indicated by the motion information of the corresponding merge candidate is available for amvpMerge. If the reference picture indicated by the motion information of the corresponding merge candidate is available for the amvpMerge mode (YES in step S1037), the image decoding apparatus 200 may add the corresponding merge candidate to the amvpMerge candidate list as a fallback candidate and add 1 to Count (S1038). In addition, the image decoding apparatus 200 may add 1 to mergeRefIdx (S1039). Thereafter, the image decoding apparatus 200 may repeatedly perform steps S1035 to S1039 on all merge candidates.

If the reference picture indicated by the motion information of the corresponding merge candidate is not available for the amvpMerge mode (NO in S1037), the image decoding apparatus 200 may immediately add 1 to mergeRefIdx (S1039). Thereafter, the image decoding apparatus 200 may repeatedly perform steps S1036 to S1039 on merge candidates that satisfy the condition of S1035.

According to another embodiment of the present disclosure, if amvpMerge mode prediction is not applied to the current block (NO in S1033), the image decoding apparatus 200 may check whether the maximum number of merge candidates is greater than Count (S 1051). If the maximum number of merge candidates is less than or equal to Count (NO in S1051), the image decoding apparatus 200 may terminate the procedure.

On the other hand, if the maximum number of merge candidates is greater than Count (YES in step S1051), the image decoding apparatus 200 may assign (0, 0, refIdx) to candidate[Count].mv[0] and candidate[Count].mv[1] (S1052). That is, the 0 vector may be assigned to a merge candidate for each of the L0 direction and the L1 direction.

The image decoding apparatus 200 may add candidates, to which the 0 vector is assigned in step S1052, to the amvpMerge candidate list (S1053). In addition, the image decoding apparatus 200 may add 1 to refIdx (S1054). The step S1051 may be performed again using the value obtained by adding 1 to refIdx. The image decoding apparatus 200 may repeatedly perform steps S1052 to S1054 on merge candidates satisfying the condition of S1051. FIGS. 10A, 10B, and 10C may be sequential processes connected to each other, or may be independent processes.

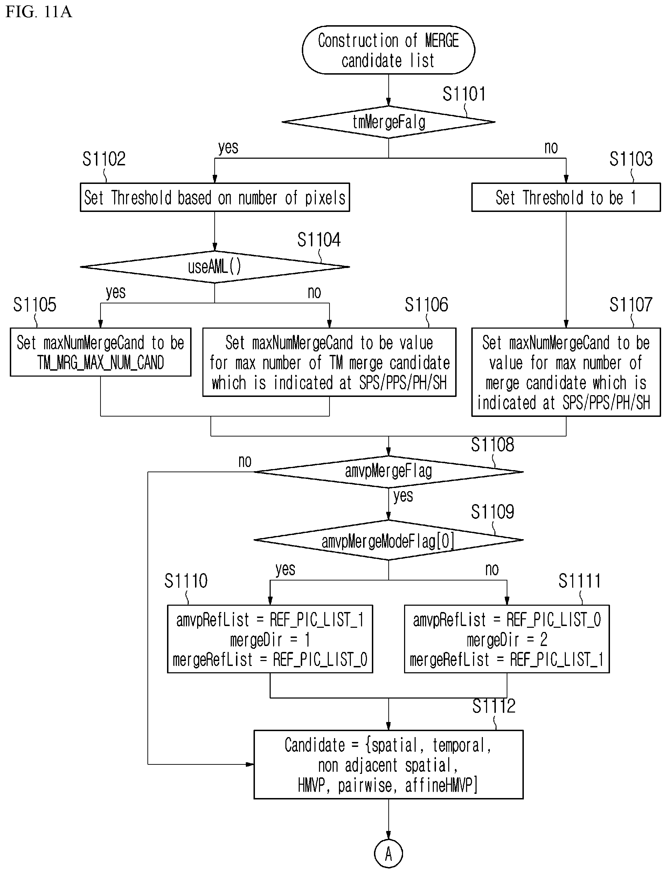

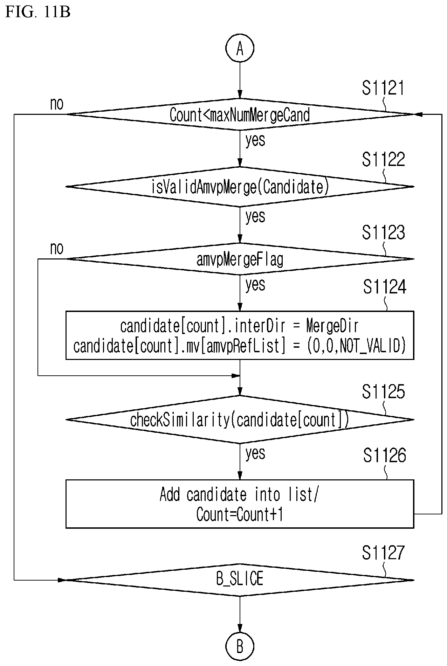

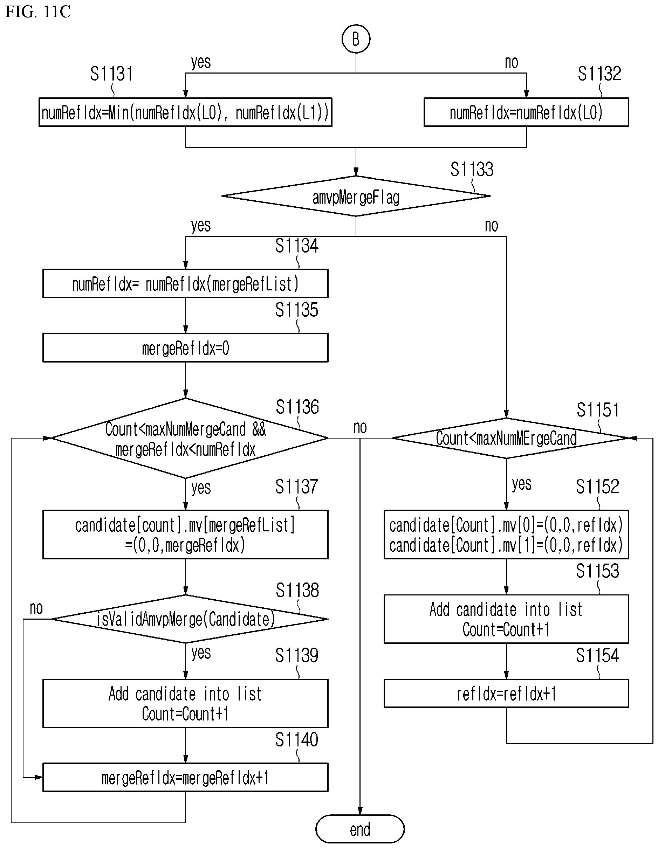

FIGS. 11A, 11B, and 11C are flowcharts illustrating a method of constructing a merge candidate list according to an embodiment of the present disclosure. According to one embodiment of the present disclosure, the image decoding apparatus 200 may check tmMergeFlag (S1101). Here, tmMergeFlag may be a flag indicating whether template matching-based merge prediction is performed.

When performing template matching-based merge prediction (YES in S1101), the image decoding apparatus 200 may set a threshold based on the number of pixels in the picture (S1102). In this case, the image decoding apparatus 200 may check useAML() (S1104). Here, useAML() may be a syntax indicating whether to use AML. When AML is used (YES in S1104), the value of maxNumMergeCand may be set to TM_MRG_MAX_NUM_CAND (S1105). On the other hand, when AML is not used (NO in S1104), the value of maxNumMergeCand may be set to the maximum number of TM merge candidates signaled at SPS/PPS/PH/SH (S1106). Here, maxNumMergeCand may mean the maximum number of merge candidates that may be included in the merge candidate list.

Meanwhile, when template matching-based merge prediction is not performed (NO in step S1101), the threshold may be set to 1 (S1103). In this case, the value of maxNumMergeCand may be set to the maximum number of TM merge candidates signaled at SPS/PPS/PH/SH (S1107).

Thereafter, the image decoding apparatus 200 may check amvpMergeFlag (S1108). Here, amvpMergeFlag may be a flag indicating whether amvpMerge mode is applied to the current block. If amvpMerge mode is applied to the current block (YES in step S1108), the image decoding apparatus 200 may check amvpMergeModeFlag[0] (S1109). Here, amvpMergeModeFlag[0] may be a flag indicating whether the prediction mode applied to the L0 prediction direction is the merge mode.

If the prediction mode applied to the L0 prediction direction is the merge mode (YES in step S1109), the image decoding apparatus 200 may generate an amvp reference picture list for the L1 direction (amvpRefList=REF_PIC_LIST_1) and a merge reference picture list for the L0 direction (mergeRefList=REF_PIC_LIST_0), and may assign 1 to an index (mergeDir) indicating the merge direction (S1110).

On the other hand, if the prediction mode applied to the L0 prediction direction is not the merge mode (NO in step S1109), the image decoding apparatus 200 may generate an amvp reference picture list for the L0 direction (amvpRefList=REF_PIC_LIST_0) and a merge reference picture list for the L1 direction (mergeRefList=REF_PIC_LIST_1), and may assign 2 to the index (mergeDir) indicating the merge direction (S1111).

The image decoding apparatus 200 may generate a merge candidate list (S1112). Even if the amvpMerge mode is not applied to the current block (NO in step S1108), the image decoding apparatus 200 may generate the merge candidate list (S1112). At this time, the merge candidates included in the merge candidate list may be motion information of spatially adjacent blocks (spatial), motion information of temporally adjacent blocks (temporal), motion information of spatially non-adjacent blocks (non-adjacent spatial), HMVP (History based Motion Vector Prediction), pairwise, and affineHMVP.

After generating merge candidates included in the merge candidate list, the image decoding apparatus 200 may check whether the maximum number of merge candidates (maxNumMergeCand) is greater than the index (count) indicating the merge candidates included in the current merge candidate list (S1121). If the maximum number of merge candidates is not greater than the index (count) indicating the merge candidates included in the current merge candidate list (NO in step S1121), that is, if the maximum number of merge candidates is less than or equal to the index (count) indicating the merge candidates included in the current merge candidate list, the image decoding apparatus 200 may check whether the slice including the current block is a B slice (S1127).

If the maximum number of merge candidates is greater than the index (count) indicating the merge candidates included in the current merge candidate list (YES in step S1121), the image decoding apparatus 200 may check the isValidAmvpMerge syntax (S1122). Here, isValidAmvpMerge may be a syntax indicating whether the reference picture indicated by the motion information of the corresponding merge candidate is available for amvpMerge. If the reference picture indicated by the motion information of the corresponding merge candidate is not available for the amvpMerge mode, the image decoding apparatus 200 may perform step S1112 again without adding the corresponding merge candidate to the amvpMerge candidate list. In this case, the image decoding apparatus 200 may perform steps S1121 to S1126 for another merge candidate.

On the other hand, if the reference picture indicated by the motion information of the corresponding merge candidate is available for the amvpMerge mode (YES in step S1122), the image decoding apparatus 200 may check amvpMergeFlag (S1123). Here, amvpMergeFlag may be a flag indicating whether the amvpMerge mode is applied to the current block. If amvpMergeFlag indicates that the amvpMerge mode is applied to the current block (YES in step S1123), the image decoding apparatus 200 may assign the value of mergeDir to candidate[count].interDir and can assign (0,0,NOT_VALID) to candidate[count].mv[amvpRefList] (S1124). That is, in order to perform the subsequent step S1125 using only the motion information of the merge candidate list, the image decoding apparatus 200 may reset the motion information of the interDir and amvp candidate lists.

Thereafter, the image decoding apparatus 200 may check checkSimilarity(candidate[count]) (S1125). Here, checkSimilarity(candidate[count]) may indicate whether the similarity between the corresponding merge candidate and the candidate previously added to the merge candidate list is similar to the threshold determined in step S1102 or step S1103. If the corresponding merge candidate and the candidate previously added to the merge candidate list are similar, the image decoding apparatus 200 may perform step S1112 again without adding the corresponding merge candidate to the amvpMerge candidate list. In this case, the image decoding apparatus 200 may perform steps S1121 to S1126 for another merge candidate. On the other hand, if the merge candidate is not similar to a candidate previously added to the merge candidate list (YES in step S1125), the image decoding apparatus 200 may add the merge candidate to the merge candidate list of amvpMerge and add 1 to the Count value (S1126).

For the Count to which 1 is added, steps S1121 to S1127 may be performed again. If the index of the merge candidate included in the merge candidate list becomes equal to the maximum number of merge candidates (NO in step S1121), the image decoding apparatus 200 may check whether the slice including the current block is a B slice (S1127). That is, after performing steps S1121 to S1126 for all merge candidates included in the merge candidate list, the image decoding apparatus 200 may check whether the slice including the current block is a B slice.

If the slice including the current block is a B slice (YES in step S1127), the image decoding apparatus 200 may assign the minimum value among the number of reference pictures in the reference picture list in the L0 direction and the number of reference pictures in the reference picture list in the L1 direction to numRefIdx (S1131). If the slice including the current block is not a B slice (NO in step S1127), the image decoding apparatus may assign the number of reference pictures in the reference picture list in the L0 direction to numRefIdx (S1132).

The image decoding apparatus 200 may check amvpMergeFlag (S1133). Here, amvpMergeFlag may be a flag indicating whether amvpMerge mode prediction is applied to the current block. If amvpMerge mode prediction is applied to the current block (YES in step S1133), the image decoding apparatus 200 may assign the number of reference pictures included in the merge reference picture list to numRefIdx (S1134). This may be to check whether all merge candidates included in the merge candidate list may be merge candidates for the amvpMerge mode.

The image decoding apparatus 200 may assign 0 to mergeRefIdx (S1135). The image decoding apparatus 200 may check whether the maximum value of the number of merge candidates is greater than the number of merge candidates included in the merge candidate list and whether the value of numRefIdx is greater than the value of mergeRdfIdx (S1136). If the maximum value of the number of merge candidates is less than or equal to the number of merge candidates included in the merge candidate list or the value of numRefIdx is less than or equal to the value of mergeRefIdx (NO in step S1136), the image decoding apparatus 200 may terminate the procedure.

On the other hand, if the maximum value of the number of merge candidates is greater than the number of merge candidates included in the merge candidate list, or the value of numRefIdx is greater than the value of mergeRefIdx (YES in step S1136), the image decoding apparatus 200 may assign (0, 0, mergeRefIdx) to candidate[Count].mv[mergeRefList] (S1137). That is, the image decoding apparatus 200 may reset the motion information of the merge candidate. Specifically, the motion vector of the merge candidate indicated by Count may be set to (0, 0, mergeRefList). Here, mergeRefList may mean a reference picture list referenced by the corresponding candidate.

The image decoding apparatus 200 may check isValidAmvpMerge(candidate) (S1138). Here, isValidAmvp-Merge(candidate) may be a syntax indicating whether the reference picture indicated by the motion information of the corresponding merge candidate is available for amvpMerge. If the reference picture indicated by the motion information of the corresponding merge candidate is available for the amvpMerge mode (YES in step S1138), the image decoding apparatus 200 may add the corresponding merge candidate to the amvpMerge candidate list as a fallback candidate and add 1 to Count (S1139). In addition, the image decoding apparatus 200 may add 1 to mergeRefIdx (S1140). Thereafter, the image decoding apparatus 200 may repeatedly perform steps S1136 to S1140 for all merge candidates.

If the reference picture indicated by the motion information of the corresponding merge candidate is not available for the amvpMerge mode (NO in S1138), the image decoding apparatus 200 may immediately add 1 to mergeRefIdx (S1140). Thereafter, the image decoding apparatus 200 may return to step S1136 and repeatedly perform steps S1136 to S1140 for all merge candidates.

According to another embodiment of the present disclosure, if amvpMerge mode prediction is not applied to the current block (NO in step S1133), the image decoding apparatus 200 may check whether the maximum number of merge candidates is greater than Count (S1151). If the maximum number of merge candidates is less than or equal to Count (NO in step S1151), the image decoding apparatus 200 may terminate the procedure.

On the other hand, if the maximum number of merge candidates is greater than Count (YES in step S1151), the image decoding apparatus 200 may assign (0, 0, refIdx) to candidate[Count].mv[0] and candidate[Count].mv[1] (S1152). That is, the 0 vector may be assigned to a merge candidate for each of the L0 direction and the L1 direction.

The image decoding apparatus 200 may add the candidates, to which the 0 vector is assigned in step S1152, to the amvpMerge candidate list (S1153). In addition, the image decoding apparatus 200 may add 1 to refIdx (S1154). The step S1151 may be performed again using the value obtained by adding 1 to refIdx. The image decoding apparatus 200 may repeatedly perform steps S1151 to S1154 for all merge candidates. Figures 11A, 11B, and 11C may be sequential processes connected to each other, or may be independent processes.

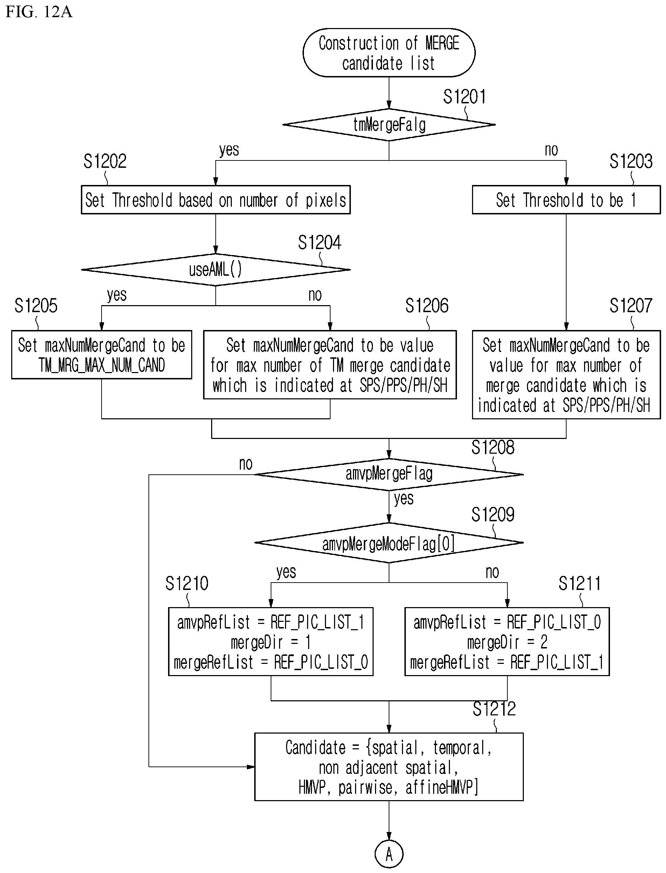

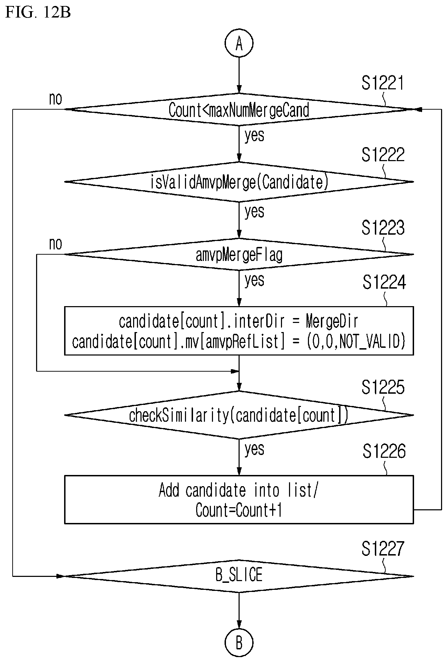

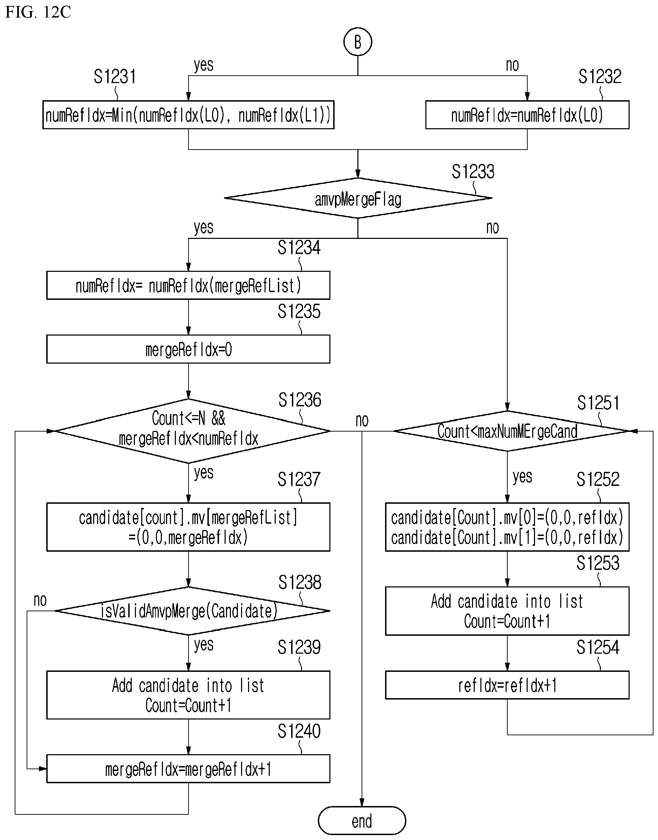

FIGS. 12A, 12B and 12C are flowcharts illustrating a method of constructing a merge candidate list according to an embodiment of the present disclosure. According to one embodiment of the present disclosure, a fallback candidate may be constructed by considering the number of reference pictures included in the merge reference picture list.

According to one embodiment of the present disclosure, the image decoding apparatus 200 may check tmMergeFlag (S1201). Here, tmMergeFlag may be a flag indicating whether template matching-based merge prediction is performed.

When performing template matching-based merge prediction (YES in S1201), the image decoding apparatus 200 may set a threshold based on the number of pixels in the picture (S1202). In this case, the image decoding apparatus 200 may check useAML() (S1204). Here, useAML() may be a syntax indicating whether to use AML. When AML is used (YES in S1204), the value of maxNumMergeCand may be set to TM_MRG_MAX_NUM_CAND (S1205). On the other hand, when AML is not used (NO in S1204), the value of maxNumMergeCand may be set to the maximum number of TM merge candidates signaled at SPS/PPS/PH/SH (S1206). Here, maxNumMergeCand may mean the maximum number of merge candidates that may be included in the merge candidate list.

Meanwhile, when template matching-based merge prediction is not performed (NO in step S1201), the threshold value may be set to 1 (S1203). In this case, the value of maxNumMergeCand may be set to the maximum number of TM merge candidates signaled at SPS/PPS/PH/SH (S1207).

Thereafter, the image decoding apparatus 200 may check amvpMergeFlag (S1208). Here, amvpMergeFlag may be a flag indicating whether the amvpMerge mode is applied to the current block. If the amvpMerge mode is applied to the current block (YES in step S1208), the image decoding apparatus 200 may check amvpMergeModeFlag[0] (S1209). Here, amvpMergeModeFlag[0] may be a flag indicating whether the prediction mode applied to the L0 prediction direction is the merge mode.

If the prediction mode applied to the L0 prediction direction is the merge mode (YES in step S1209), the image decoding apparatus 200 may generate an amvp reference picture list for the L1 direction (amvpRefList=REF_PIC_LIST_1) and a merge reference picture list for the L0 direction (mergeRefList=REF _PIC_LIST_0), and may assign 1 to an index (mergeDir) indicating the merge direction (S1210).

On the other hand, if the prediction mode applied to the L0 prediction direction is not the merge mode (NO in step S1209), the image decoding apparatus 200 may generate an amvp reference picture list for the L0 direction (amvpRefList=REF_PIC_LIST_0) and a merge reference picture list for the L1 direction (mergeRefList=REF_PIC_LIST_1), and may assign 2 to the index (mergeDir) indicating the merge direction (S1211).

The image decoding apparatus 200 may generate a merge candidate list (S1212). Even if the amvpMerge mode is not applied to the current block (NO in step S1208), the image decoding apparatus 200 may generate a merge candidate list (S1212). At this time, the merge candidates included in the merge candidate list may be motion information of spatially adjacent blocks (spatial), motion information of temporally adjacent blocks (temporal), motion information of spatially non-adjacent blocks (non-adjacent spatial), HMVP (History based Motion Vector Prediction), pairwise, and affineHMVP.

After generating merge candidates included in the merge candidate list, the image decoding apparatus 200 may check whether the maximum number of merge candidates (maxNumMergeCand) is greater than the index (count) indicating the merge candidates included in the current merge candidate list (S1221). If the maximum number of merge candidates is not greater than the index (count) indicating the merge candidates included in the current merge candidate list (NO in step S1221), that is, if the maximum number of merge candidates is less than or equal to the index (count) indicating the merge candidates included in the current merge candidate list, the image decoding apparatus 200 may check whether the slice including the current block is a B slice (S1227).

If the maximum number of merge candidates is greater than the index (count) indicating the merge candidates included in the current merge candidate list (YES in step S1221), the image decoding apparatus 200 may check the isValidAmvpMerge syntax (S1222). Here, isValidAmvpMerge may be a syntax indicating whether the reference picture indicated by the motion information of the corresponding merge candidate is available for amvpMerge. If the reference picture indicated by the motion information of the corresponding merge candidate is not available for the amvpMerge mode, the image decoding apparatus 200 may perform step S1212 again without adding the corresponding merge candidate to the amvpMerge candidate list. In this case, the image decoding apparatus 200 may perform steps S1221 to S1226 for another merge candidate.

On the other hand, if the reference picture indicated by the motion information of the corresponding merge candidate is available for the amvpMerge mode (YES in step S1222), the image decoding apparatus 200 may check amvpMergeFlag (S1223). Here, amvpMergeFlag may be a flag indicating whether the amvpMerge mode is applied to the current block. If amvpMergeFlag indicates that the amvpMerge mode is applied to the current block (YES in step S1223), the image decoding apparatus 200 may assign the value of mergeDir to candidate[count].interDir and can assign (0,0,NOT_VALID) to candidate[count].mv[amvpRefList] (S1224). That is, in order to perform the subsequent step S1225 using only the motion information of the merge candidate list, the image decoding apparatus 200 may reset the motion information of the interDir and amvp candidate lists.

Thereafter, the image decoding apparatus 200 may check checkSimilarity(candidate[count]) (S1225). Here, checkSimilarity(candidate[count]) may indicate whether the similarity between the corresponding merge candidate and the candidate previously added to the merge candidate list is similar to the threshold determined in step S1202 or step S1203. If the corresponding merge candidate and the candidate previously added to the merge candidate list are similar, the image decoding apparatus 200 may perform step S1212 again without adding the corresponding merge candidate to the amvpMerge candidate list. In this case, the image decoding apparatus 200 may perform steps S1221 to S1226 for another merge candidate. On the other hand, if the merge candidate is not similar to a candidate previously added to the merge candidate list (YES in step S1225), the image decoding apparatus 200 may add the merge candidate to the merge candidate list of amvpMerge and add 1 to the Count value (S1226).

For the Count to which 1 is added, steps S1221 to S1227 may be performed again. If the index of the merge candidate included in the merge candidate list becomes equal to the maximum number of merge candidates (NO in step S1221), the image decoding apparatus 200 may check whether the slice including the current block is a B slice (S1227). That is, after performing steps S1221 to S1226 for all merge candidates included in the merge candidate list, the image decoding apparatus 200 may check whether the slice including the current block is a B slice.

If the slice including the current block is a B slice (YES in step S1227), the image decoding apparatus 200 may assign the minimum value among the number of reference pictures in the reference picture list in the L0 direction and the number of reference pictures in the reference picture list in the L1 direction to numRefIdx (S1231). If the slice including the current block is not a B slice (NO in step S1227), the image decoding apparatus may assign the number of reference pictures in the reference picture list in the L0 direction to numRefIdx (S1232).

The image decoding apparatus 200 may check amvpMergeFlag (S1233). Here, amvpMergeFlag may be a flag indicating whether amvpMerge mode prediction is applied to the current block. If amvpMerge mode prediction is applied to the current block (YES in step S1233), the image decoding apparatus 200 may assign the number of reference pictures included in the merge reference picture list to numRefIdx (S1234).

In addition, the image decoding apparatus 200 may assign 0 to mergeRefIdx (S1235). The image decoding apparatus 200 may check whether a predefined arbitrary N is greater than or equal to an index indicating a merge candidate included in the merge candidate list and whether the value of numRefIdx is greater than the value of mergeRdfIdx (S1236). If the predefined arbitrary N is smaller than the number of merge candidates included in the merge candidate list, or the value of numRefIdx is less than or equal to the value of mergeRefIdx (NO in step S1236), the image decoding apparatus 200 may terminate the procedure.

On the other hand, if the predefined arbitrary N is greater than or equal to the number of merge candidates included in the merge candidate list, or the value of numRefIdx is greater than the value of mergeRefIdx (YES in step S1236), the image decoding apparatus 200 may assign (0, 0, mergeRefIdx) to candidate[Count].mv[mergeRefList] (S1237). That is, the image decoding apparatus 200 may reset the motion information of the merge candidate. Specifically, the motion vector of the merge candidate indicated by Count can be set to (0, 0, mergeRefList). Here, mergeRefList may mean a reference picture list referenced by the corresponding candidate.

The image decoding apparatus 200 may check isValidAmvpMerge(candidate) (S1238). Here, isValidAmvp-Merge(candidate) may be a syntax indicating whether the reference picture indicated by the motion information of the corresponding merge candidate is available for amvpMerge. If the reference picture indicated by the motion information of the corresponding merge candidate is available for the amvpMerge mode (YES in step S1238), the image decoding apparatus 200 may add the corresponding merge candidate to the amvpMerge candidate list as a fallback candidate and add 1 to Count (S1239). In addition, the image decoding apparatus 200 may add 1 to mergeRefldx (S1240). Thereafter, the image decoding apparatus 200 may repeatedly perform steps S1236 to S1240 on merge candidates that satisfy the condition of S1236.

If the reference picture indicated by the motion information of the corresponding merge candidate is not available for the amvpMerge mode (NO in S1238), the image decoding apparatus 200 may immediately add 1 to mergeRefldx (S1240). Thereafter, the image decoding apparatus 200 may return to step S1236 and repeatedly perform steps S1236 to S1240 on merge candidates that satisfy the condition of S1236.

According to another embodiment of the present disclosure, if amvpMerge mode prediction is not applied to the current block (NO in step S1233), the image decoding apparatus 200 may check whether the maximum number of merge candidates is greater than Count (S1251). If the maximum number of merge candidates is less than or equal to Count (NO in step S1251), the image decoding apparatus 200 may terminate the procedure.

On the other hand, if the maximum number of merge candidates is greater than Count (YES in step S1251), the image decoding apparatus 200 may assign (0, 0, refldx) to candidate[Count].mv[0] and candidate[Count].mv[1] (S1252). That is, the 0 vector may be assigned to a merge candidate for each of the L0 direction and the L1 direction.

The image decoding apparatus 200 may add the candidates to which the 0 vector is assigned in step S1252, to the amvpMerge candidate list (S1253). In addition, the image decoding apparatus 200 may add 1 to refldx (S1254). The step S1251 may be performed again using the value obtained by adding 1 to refldx. The image decoding apparatus 200 may repeatedly perform steps S1251 to S1254 on merge candidates satisfying the condition of S1251. FIGS. 12A, 12B, and 12C may be sequential processes connected to each other, or may be independent processes.

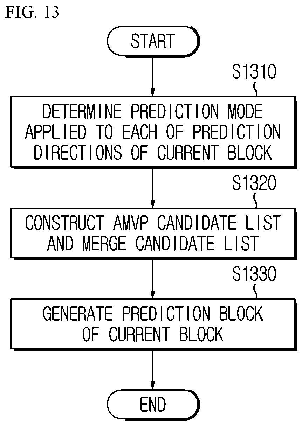

FIG. 13 is a flowchart of a fallback merge candidate construction method according to an embodiment of the present disclosure. Hereinafter, the subject of FIG. 13 is described as the image decoding apparatus 200, but it is obvious that the subject may be the image encoding apparatus 100.

According to one embodiment of the present disclosure, the image decoding apparatus 200 may determine a prediction mode applied to each of the prediction directions of a current block (S1310). At this time, each of the prediction modes may include an amvp mode and/or a merge mode.

The image decoding apparatus 200 may construct an amvp candidate list and a merge candidate list (S1320). That is, the amvp candidate list and the merge candidate list may be constructed based on the determined prediction modes. At this time, the merge candidate list may include a fallback candidate. The fallback candidate may be included in the merge candidate list based on the number of merge candidates included in the merge candidate list being less than the maximum number of merge candidates.

Alternatively, the fallback candidate may be included in the merge candidate list based on the number of reference pictures included in the merge reference picture list being less than a predetermined value. Here, the predetermined value may be the smaller value among the number of reference pictures included in the merge reference picture list and the number of reference pictures included in the amvp reference picture list. Alternatively, the predetermined value may be the number of reference pictures included in the merge reference picture list.

Alternatively, the fallback candidate may be included in the merge candidate list based on the reference picture of the fallback candidate being available in the amvpMerge mode. Alternatively, the fallback candidate may be included in the merge candidate list based on the number of merge candidates included in the merge candidate list being less than or equal to a predefined value.

The image decoding apparatus 200 may generate a prediction block of the current block (S1330). Specifically, the prediction block of the current block may be generated based on the amvp candidate list and the merge candidate list.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

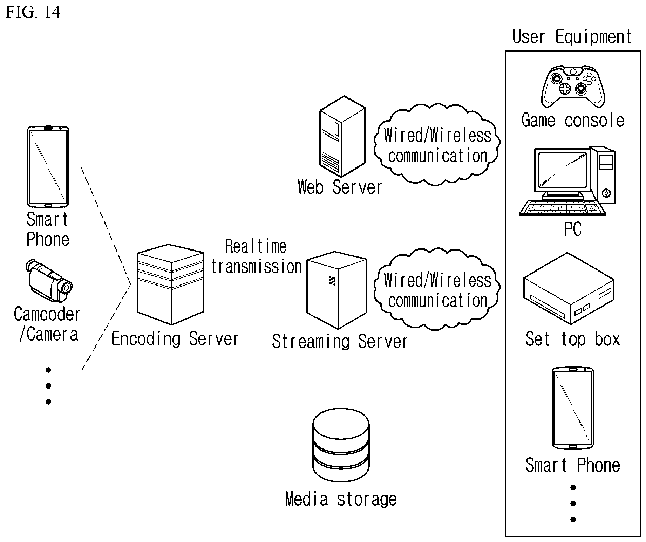

FIG. 14 is a view showing a content streaming system, to which an embodiment of the present disclosure is applicable.

As shown in FIG. 14, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

determining prediction modes respectively applied to prediction directions of a current block, the prediction mode comprising an AMVP mode and a merge mode;

**EP 4 554 210 A1**

constructing an AMVP candidate list and a merge candidate list based on the prediction modes; and generating a prediction block of the current block based on the AMVP candidate list and the merge candidate list, wherein the merge candidate list includes a fallback candidate.

2. The image decoding method of claim 1, wherein the fallback candidate is included in the merge candidate list based on the number of merge candidates included in the merge candidate list being less than a maximum number of merge candidates.

3. The image decoding method of claim 1, wherein the fallback candidate is included in the merge candidate list based on the number of reference pictures included in a merge reference picture list being less than a predetermined value.

4. The image decoding method of claim 3, wherein the predetermined value is the smaller value among the number of reference pictures included in the merge reference picture list and the number of reference pictures included in the AMVP reference picture list.

5. The image decoding method of claim 3, wherein the predetermined value is the number of reference pictures included in the merge reference picture list.

6. The image decoding method of claim 3, wherein the fallback candidate is included in the merge candidate list based on a reference picture of the fallback candidate being available.

7. The image decoding method of claim 1, wherein the fallback candidate is included in the merge candidate list based on the number of merge candidates included in the merge candidate list being less than or equal to a predefined value.

8. An image encoding method performed by an image encoding apparatus, the image encoding method comprising:

determining prediction modes respectively applied to prediction directions of a current block, the prediction mode comprising an AMVP mode and a merge mode;
constructing an AMVP candidate list and a merge candidate list based on the prediction modes; and
generating a prediction block of the current block based on the AMVP candidate list and the merge candidate list, wherein the merge candidate list includes a fallback candidate.

9. A method of transmitting a bitstream generated by an image encoding method, the image encoding method comprising:

determining prediction modes respectively applied to prediction directions of a current block, the prediction mode comprising an AMVP mode and a merge mode;
constructing an AMVP candidate list and a merge candidate list based on the prediction modes; and
generating a prediction block of the current block based on the AMVP candidate list and the merge candidate list, wherein the merge candidate list includes a fallback candidate.

24

FIG. 1

FIG. 2

FIG. 3

FIG. 4

180

181

PREDICTION MODE
DETERMINATION UNIT

182

MOTION INFORMATION
DERIVATION UNIT

183

PREDICTION SAMPLE
DERIVATION UNIT

INTER PREDICTION UNIT

ORIGINAL PICTURE

REFERENCE PICTURE

PREDICTION MODE INFORMATION
INFORMATION REGARDING
MOTION INFORMATION

PREDICTION SAMPLE

FIG. 5

START

S510

PERFORM PREDICTION (DETERMINE
INTER PREDICTION MODE, DERIVE
MOTION INFORMATION, AND
GENERATE PREDICTION SAMPLES)

S520

DERIVE RESIDUAL SAMPLES
BASED ON PREDICTION SAMPLES

S530

ENCODE IMAGE INFORMATION
INCLUDING PREDICTION INFORMATION
AND RESIDUAL INFORMATION

END

FIG. 6

260

261
PREDICTION MODE
DETERMINATION UNIT

PREDICTION MODE INFORMATION
INFORMATION REGARDING
MOTION INFORMATION

262
MOTION INFORMATION
DERIVATION UNIT

PREDICTION SAMPLE

REFERENCE PICTURE

263
PREDICTION SAMPLE
DERIVATION UNIT

INTER PREDICTION UNIT

FIG. 7

START

S710
DETERMINE PREDICTION MODE FOR
CURRENT BLOCK BASED ON
RECEIVED PREDICTION INFORMATION

S720
DERIVE MOTION INFORMATION

S730
PERFORM PREDICTION
(GENERATE PREDICTION SAMPLES)

S740
DERIVE RESIDUAL SAMPLES
BASED ON RESIDUAL INFORMATION

S750
RECONSTRUCT PICTURE
BASED ON PREDICTION SAMPLES
AND RESIDUAL SAMPLES

END

FIG. 8

START

DETERMINE AN INTER PREDICTION MODE ⟩ S810

DERIVE MOTION INFORMATION ⟩ S820

PERFORM PREDICTION BASED
ON THE MOTION INFORMATION
(GENERATE A PREDICTION SAMPLE) ⟩ S830

END

FIG. 9

Reference picture

Current picture

FIG. 10A

```
                    ┌─────────────────────┐
                    │ Construction of MERGE│
                    │   candidate list     │
                    └──────────┬──────────┘
                               │                S1001
                          ◇─────────◇
                     ────  tmMergeFalg  ────
                     yes                      no
        S1002                                          S1003
┌───────────────────────────────┐    ┌─────────────────────────┐
│ Set Threshold based on number │    │  Set Threshold to be 1  │
│         of pixels             │    │                         │
└───────────────┬───────────────┘    └────────────┬────────────┘
                │          S1004                   │
           ◇─────────◇                             │
      ──── useAML() ────                           │
      yes              no        S1006             │        S1007
 S1005                                             │
┌──────────────────┐ ┌──────────────────────┐  ┌──────────────────────┐
│Set maxNumMergeCand│ │ Set maxNumMergeCand  │  │ Set maxNumMergeCand  │
│to be TM_MRG_MAX_  │ │ to be value for max  │  │ to be value for max  │
│   NUM_CAND        │ │ number of TM merge   │  │ number of merge      │
│                   │ │ candidate which is   │  │ candidate which is   │
│                   │ │ indicated at         │  │ indicated at         │
│                   │ │ SPS/PPS/PH/SH        │  │ SPS/PPS/PH/SH        │
└──────────────────┘ └──────────────────────┘  └──────────────────────┘
```

Candidate = {spatial, temporal, non adjacent spatial, HMVP, pairwise, affineHMVP]

FIG. 10A — Construction of MERGE candidate list

- S1001: tmMergeFalg
- S1002: Set Threshold based on number of pixels (yes)
- S1003: Set Threshold to be 1 (no)
- S1004: useAML()
- S1005: Set maxNumMergeCand to be TM_MRG_MAX_NUM_CAND (yes)
- S1006: Set maxNumMergeCand to be value for max number of TM merge candidate which is indicated at SPS/PPS/PH/SH (no)
- S1007: Set maxNumMergeCand to be value for max number of merge candidate which is indicated at SPS/PPS/PH/SH
- S1008: amvpMergeFlag (no)
- S1009: amvpMergeModeFlag[0]
- S1010: amvpRefList = REF_PIC_LIST_1, mergeDir = 1, mergeRefList = REF_PIC_LIST_0 (yes)
- S1011: amvpRefList = REF_PIC_LIST_0, mergeDir = 2, mergeRefList = REF_PIC_LIST_1 (no)
- S1012: Candidate = {spatial, temporal, non adjacent spatial, HMVP, pairwise, affineHMVP]

A

FIG. 10B

```
                          (A)
                           │
                           ▼
        no   ┌──────────────────────────────┐   S1021
    ┌────────◄   Count<maxNumMergeCand        ►
    │        └──────────────────────────────┘
    │                      │ yes
    │                      ▼
    │        ┌──────────────────────────────┐   S1022
    │        ◄   isValidAmvpMerge(Candidate)  ►
    │        └──────────────────────────────┘
    │                      │ yes
    │        no            ▼                      S1023
    │   ┌─────────◄      amvpMergeFlag        ►
    │   │        └──────────────────────────────┘
    │   │                  │ yes                  S1024
    │   │        ┌──────────────────────────────────────────┐
    │   │        │  candidate[count].interDir = MergeDir      │
    │   │        │ candidate[count].mv[amvpRefList] = (0,0,NOT_VALID) │
    │   │        └──────────────────────────────────────────┘
    │   │                  │
    │   └──────────────────┤
    │                      ▼                      S1025
    │        ◄   checkSimilarity(candidate[count])  ►
    │        └──────────────────────────────┘
    │                      │ yes                  S1026
    │        ┌──────────────────────────────┐
    │        │      Add candidate into list/  │
    │        │         Count=Count+1          │
    │        └──────────────────────────────┘
    │                                              S1027
    └────────►◄           B_SLICE              ►
             └──────────────────────────────┘
                           │
                           ▼
                          (B)
```

FIG. 10C

FIG. 11A

Construction of MERGE
candidate list

↓ S1101

tmMergeFalg

yes ↙     no ↘

S1102

Set Threshold based on number of pixels

S1103

Set Threshold to be 1

↓ S1104

useAML()

yes ↙    no ↘

S1105

Set maxNumMergeCand to be
TM_MRG_MAX_NUM_CAND

S1106

Set maxNumMergeCand to be value
for max number of TM merge candidate
which is indicated at SPS/PPS/PH/SH

S1107

Set maxNumMergeCand to be
value for max number of
merge candidate which is
indicated at SPS/PPS/PH/SH

↓ S1108

no ← amvpMergeFlag

yes ↓ S1109

amvpMergeModeFlag[0]

yes ↙    no ↘

S1110

amvpRefList = REF_PIC_LIST_1
mergeDir = 1
mergeRefList = REF_PIC_LIST_0

S1111

amvpRefList = REF_PIC_LIST_0
mergeDir = 2
mergeRefList = REF_PIC_LIST_1

↓ S1112

Candidate = {spatial, temporal,
non adjacent spatial,
HMVP, pairwise, affineHMVP]

↓

A

FIG. 11B

FIG. 11C

B

S1131 — yes

numRefIdx=Min(numRefIdx(L0), numRefIdx(L1))

no — S1132

numRefIdx=numRefIdx(L0)

S1133

amvpMergeFlag

yes

S1134

numRefIdx= numRefIdx(mergeRefList)

S1135

mergeRefIdx=0

S1136

Count<maxNumMergeCand &&
mergeRefIdx<numRefIdx

no

yes  S1137

candidate[count].mv[mergeRefList]
=(0,0,mergeRefIdx)

S1138

no

IsValidAmvpMerge(Candidate)

yes  S1139

Add candidate into list
Count=Count+1

S1140

mergeRefIdx=mergeRefIdx+1

no

S1151

Count<maxNumMErgeCand

yes  S1152

candidate[Count].mv[0]=(0,0,refIdx)
candidate[Count].mv[1]=(0,0,refIdx)

S1153

Add candidate into list
Count=Count+1

S1154

refIdx=refIdx+1

end

FIG. 12A

FIG. 12B

A

no                                                                    S1221
    Count<maxNumMergeCand

                           yes
                                                                      S1222
            isValidAmvpMerge(Candidate)

                           yes
no                                                                    S1223
                 amvpMergeFlag

                           yes                                        S1224
    candidate[count].interDir = MergeDir
    candidate[count].mv[amvpRefList] = (0,0,NOT_VALID)

                                                                      S1225
        checkSimilarity(candidate[count])

                           yes                                        S1226
            Add candidate into list/
                 Count=Count+1

                                                                      S1227
                    B_SLICE

                           B

FIG. 12C

FIG. 13

```
         ┌─────────────┐
         │    START    │
         └──────┬──────┘
                │              S1310
                ▼
   ┌───────────────────────────┐
   │  DETERMINE PREDICTION MODE │
   │  APPLIED TO EACH OF PREDICTION │
   │  DIRECTIONS OF CURRENT BLOCK │
   └─────────────┬─────────────┘
                 │              S1320
                 ▼
   ┌───────────────────────────┐
   │  CONSTRUCT AMVP CANDIDATE LIST │
   │   AND MERGE CANDIDATE LIST │
   └─────────────┬─────────────┘
                 │              S1330
                 ▼
   ┌───────────────────────────┐
   │  GENERATE PREDICTION BLOCK │
   │      OF CURRENT BLOCK      │
   └─────────────┬─────────────┘
                 │
                 ▼
         ┌─────────────┐
         │     END     │
         └─────────────┘
```

FIG. 14

User Equipment

Game console

PC

Set top box

Smart Phone

Smart Phone

Camcoder /Camera

Encoding Server

Realtime transmission

Web Server

Wired/Wireless communication

Streaming Server

Wired/Wireless communication

Media storage

**INTERNATIONAL SEARCH REPORT**

| International application No. |
|---|
| **PCT/KR2023/009522** |

**A. CLASSIFICATION OF SUBJECT MATTER**

**H04N 19/109**(2014.01)i; **H04N 19/105**(2014.01)i; **H04N 19/176**(2014.01)i; **H04N 19/132**(2014.01)i

According to International Patent Classification (IPC) or to both national classification and IPC

**B. FIELDS SEARCHED**

Minimum documentation searched (classification system followed by classification symbols)

H04N 19/109(2014.01); H04N 19/105(2014.01); H04N 19/119(2014.01); H04N 19/57(2014.01); H04N 19/583(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), AMVP(advanced motion vector prediction), 병합(merge), 후보(candidate), 목록(list), 폴 백(fall back)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0144509 A (ELECTRONICS AND TELECOMMUNICATIONS RESEARCH INSTITUTE) 29 December 2020 (2020-12-29) See paragraphs [0110], [0133], [0141], [0203], [0208] and [0420]; and figures 1-2. | 1-9 |
| Y | COBAN, Muhammed et al. Algorithm description of Enhanced Compression Model 4 (ECM 4). JVET-Y2025-v2, Joint Video Experts Team (JVET) of ITU-T SG 16 WP 3 and ISO/IEC JTC 1/SC 29, 23rd Meeting, by teleconference. pp. 1-32, 13 April 2022. See page 19. | 1-9 |
| Y | KR 10-2022-0073719 A (ELECTRONICS AND TELECOMMUNICATIONS RESEARCH INSTITUTE et al.) 03 June 2022 (2022-06-03) See paragraphs [0127], [0487], [0497], [0509] and [0513]. | 2-7 |
| A | KR 10-2022-0051414 A (LG ELECTRONICS INC.) 26 April 2022 (2022-04-26) See claims 1-7. | 1-9 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 October 2023** | **13 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/009522**

### C. DOCUMENTS CONSIDERED TO BE RELEVANT

| Category* | Citation of document, with indication, where appropriate, of the relevant passages | Relevant to claim No. |
|---|---|---|
| A | US 2020-0344492 A1 (MEDIATEK INC.) 29 October 2020 (2020-10-29)<br>See paragraph [0056]. | 1-9 |

Form PCT/ISA/210 (second sheet) (July 2022)

INTERNATIONAL SEARCH REPORT
Information on patent family members

International application No.

**PCT/KR2023/009522**

| Patent document cited in search report | | | Publication date (day/month/year) | Patent family member(s) | | | Publication date (day/month/year) |
|---|---|---|---|---|---|---|---|
| KR | 10-2020-0144509 | A | 29 December 2020 | CN | 113906740 | A | 07 January 2022 |
| | | | | EP | 3989546 | A1 | 27 April 2022 |
| | | | | US | 2022-0321894 | A1 | 06 October 2022 |
| | | | | WO | 2020-256422 | A1 | 24 December 2020 |
| KR | 10-2022-0073719 | A | 03 June 2022 | US | 11212553 | B2 | 28 December 2021 |
| | | | | US | 2022-0078485 | A1 | 10 March 2022 |
| | | | | WO | 2019-107927 | A1 | 06 June 2019 |
| KR | 10-2022-0051414 | A | 26 April 2022 | CN | 111903134 | A | 06 November 2020 |
| | | | | EP | 3742733 | A1 | 25 November 2020 |
| | | | | JP | 2023-015383 | A | 31 January 2023 |
| | | | | JP | 7184911 | B2 | 06 December 2022 |
| | | | | KR | 10-2023-0034425 | A | 09 March 2023 |
| | | | | KR | 10-2504741 | B1 | 02 March 2023 |
| | | | | US | 11570429 | B2 | 31 January 2023 |
| | | | | US | 2023-0118101 | A1 | 20 April 2023 |
| | | | | WO | 2020-141889 | A1 | 09 July 2020 |
| US | 2020-0344492 | A1 | 29 October 2020 | US | 11432004 | B2 | 30 August 2022 |